# EUROPEAN PATENT APPLICATION

(11) **EP 2 669 178 A1**
(43) Date of publication of application: **04.12.2013**
(21) Application number: 13181622.5
(22) Date of filing: 07.06.2011
(51) Int. Cl.: B63B 59/02, B63B 27/14, E02B 3/26

(54) **Transfer apparatus with compensation means for vessel movement**

(30) Priority: 07.06.2010 GB 201009501
(62) Divisional of application: 11743577.6
(71) Applicant: Bmt Nigel Gee Limited, Southampton, Hampshire SO14 5QL (GB); Houlder Limited, London EC4R 3TE (GB)
(72) Inventor: Dudson, Edward Robertson Peter, Southampton, Hampshire SO17 1RE (GB); Perdrix, Frederic Vincent, Edenbridge, Kent TN8 7EP (GB)
(74) Representative: Robinson, Simon John

(57) **Abstract**

A vessel (1) comprises a roller assembly (32), the assembly comprising at least one roller arranged to bear against a structure to be accessed, the assembly further comprising a damper to inhibit rotation of the roller such that the roller arranged to inhibit relative movement of the vessel to the structure and the vessel further comprising a gangway assembly (10) for a vessel comprising a gangway (12), a pivotably mounted base (20), a sensor arrangement to sense movement of the vessel, an end portion (14) of the gangway pivotably connected to the base and an actuator connected to the gangway responsive to signals from the sensor arrangement to control the vertical position of an opposite end portion (15) of the gangway so as to compensate for vertical movement of the vessel, and the base arranged to respond to and compensate for roll of the vessel.

## Description

### Technical Field

The present invention relates generally to transfer apparatus for vessels, and in particular, although not exclusively, to transfer apparatus to allow transfer of persons between a vessel and an offshore structure.

### Background

Enabling transfer of personnel from a vessel to an offshore structure, such as a wind turbine, can be a difficult and hazardous operation. Known methods involve reliance on a frictional engagement between fenders, provided at the bow of the vessel, and the structure. In anything other than calm sea conditions this method of transfer is unsatisfactory. We seek to provide an improved transfer apparatus.

### Summary

According to a first aspect of the invention there is provided a vessel comprising a roller assembly, the assembly comprising at least one roller arranged to bear against a structure to be accessed, the assembly further comprising a damper to inhibit rotation of the roller such that the roller arranged to inhibit relative movement of the vessel to the structure.

Preferably the at least one roller is positioned at an outer margin of the vessel.

Preferably the at least one roller is positioned at a forward-facing portion of the outer margin of the vessel.

Preferably the vessel comprises two spaced-apart rollers.

Preferably the at least one roller is substantially diabolo shape.

The damper comprises a hydraulic damper, a mechanical friction brake or an induce eddy current electric brake.

The vessel may comprise a sensor to determine the rotational position of the at least one roller.

The at least one roller is preferably arranged to bear against an access arrangement of the structure.

According to a second aspect of the invention there is provided a roller assembly comprising at least one roller arranged to bear against a structure to be accessed, the assembly further comprising a damper to inhibit rotation of the roller such that the roller arranged to inhibit relative movement of the vessel to the structure.

According to a third aspect of the invention there is provided a gangway assembly for mounting to a vessel comprising a gangway, a pivotably mounted base, a sensor arrangement to sense movement of the vessel, an end portion of the gangway pivotably connected to the base and an actuator connected to the gangway responsive to signals from the sensor arrangement to control the vertical position of an opposite end portion of the gangway so as to compensate for vertical movement of the vessel, and the base arranged to respond to and compensate for roll of the vessel.

In one embodiment, the base is arranged to respond to and compensate for horizontal movements (especially longitudinal and lateral movements) induced by roll and pitch of the vessel.

The actuator is preferably located at a distal end portion of the gangway.

The gangway is preferably pivotably mounted to the actuator assembly.

The base preferably comprises a gimballed base.

The actuator is preferably connected to the gangway and to the base.

The actuator is preferably arranged to adjust the gangway positioning to take account of the vertical motion of the vessel, resulting from the vessel pitching and heaving

The base preferably comprises a roll actuator responsive to signals from the sensor arrangement so as to adjust the gangway to take account of and compensate for rolling of the vessel.

The base preferably comprises a surge actuator responsive to signals from the sensor arrangement so as to adjust the gangway to take account of and compensate for the surge induced by the vessel.

The gangway preferably comprises a free-end portion arranged to be unattached to the structure in use of the gangway.

The gangway preferably comprises a free-end portion arranged to locate within an access region of the structure.

### Brief description of the drawings

Various embodiments of the invention will now be described, by way of example only, with reference to the following drawings in which:
**Figure 1** is partial isometric view of a gangway assembly on a first vessel,

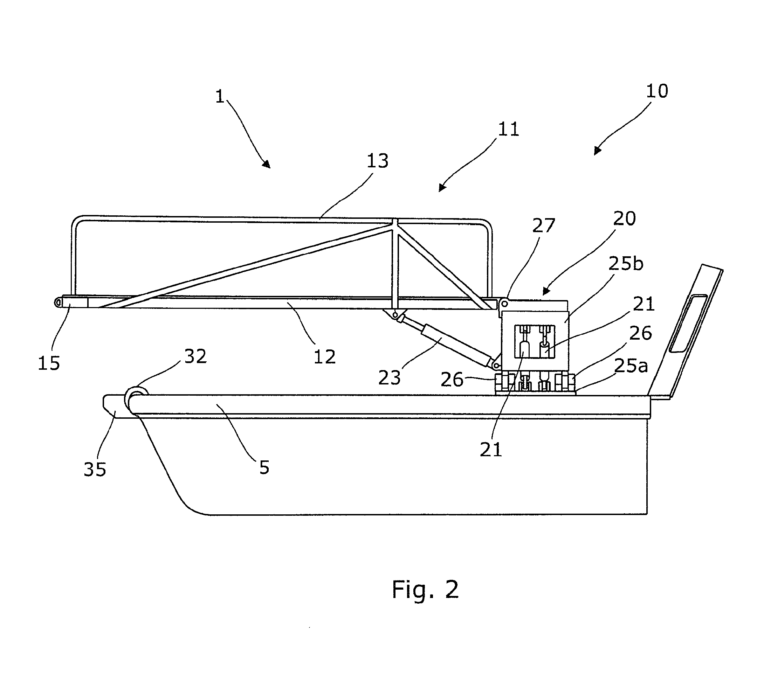

**Figure 2** is a side elevation of Figure 1,

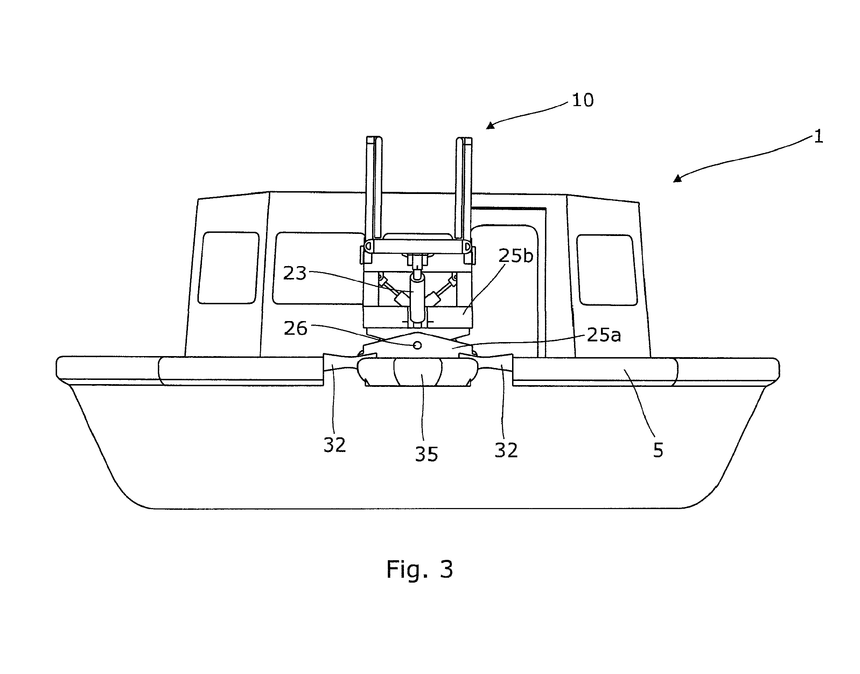

**Figure 3** is a front elevation of Figure 1,
**Figure 4** is a functional block diagram of a control system of the gangway assembly of Figure 1,
**Figures 5a, 5b** and **5c**, are side elevations of a gangway assembly in different positions,
**Figures 6a****, 6b** and **6c** are front elevations of the gangway assembly of Figures 5a, 5b and 5c in different angular positions,
**Figure 7** is perspective view of a second vessel,
Figure 8 is another perspective view of the second vessel,
**Figure 9** shows a plan view of a further embodiment of a vessel bearing against a structure to be accessed,
**Figure 10** is a perspective view of an embodiment of a gangway assembly, and

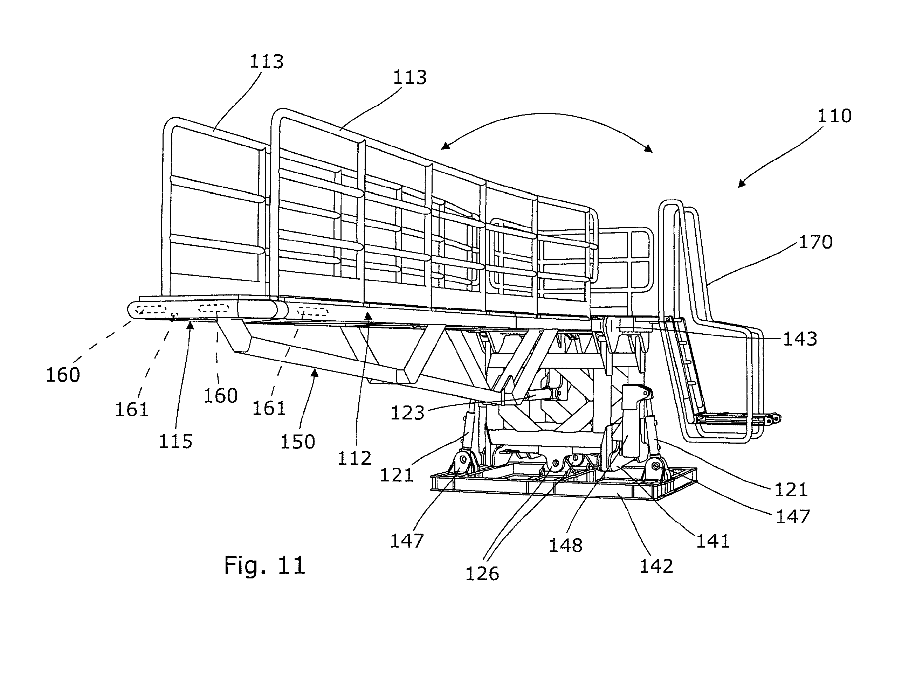

**Figure 11** is a further view of the gangway assembly of Figure 10.

### Detailed description

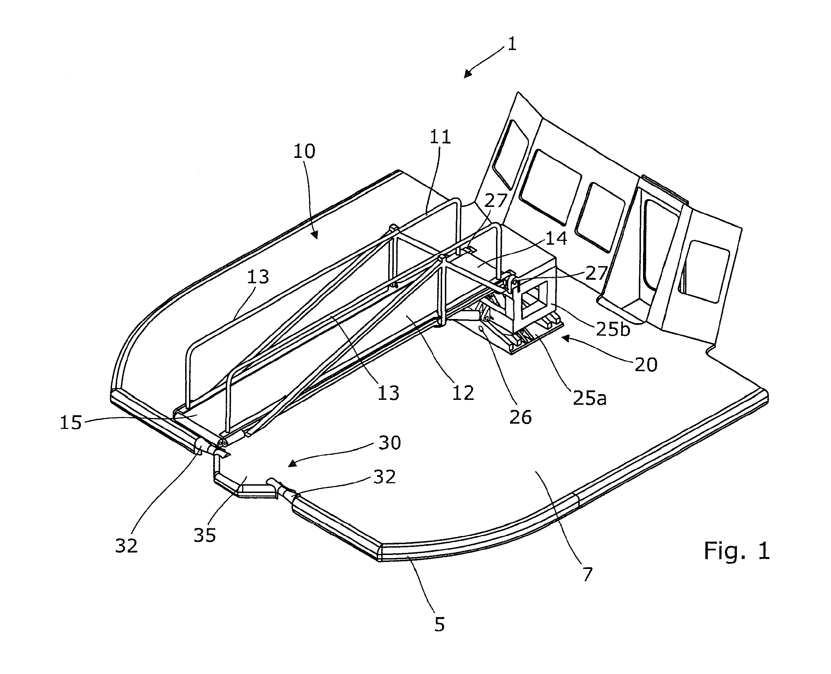

Figure 1 shows a vessel 1 comprising a gangway assembly 10 and a damped roller assembly 30, which, as will be described below, enable personnel to gain access to and from a structure alongside to the vessel 1.

The damped roller assembly 30 comprises two spaced-apart rollers 32, each of substantially diabolo shape. It will be appreciated that the rollers need not necessarily be of diabolo shape, and may alternative comprise a plurality of adjacent rollers arranged in an arc, or even a cylindrical roller. The rollers are located at the bow of the vessel, at an outer margin 5 thereof. As can be seen in Figure 1, the rollers are positioned on each side of a protruding portion 35. Each roller is connected to a damper (not shown) in the form of a continuous rotational damping (CRD) device, which comprises a continuous rotation hydraulic system in which as the roller is forced to rotate, fluid is forced through a valve or baffle, or similar fluid constriction, so as to act against (and in proportion to) the force urging the roller to rotate. The extent of damping applied to the roller may be adjustable in an initial set-up procedure. The damper may, in an alternative embodiment comprise a mechanical friction brake with or without an anti-lock braking (ABS) type system, or an induce eddy current electric brake.

The roller assembly 30 further comprises a sensor (not illustrated) arranged to sense the instantaneous rotational position and speed of the roller. The sensor comprises an encoder to receive signals, for example optical or magnetic, from the roller, or a component attached to the roller, and monitor receipt of the signals as the roller rotates (and thereby enabling determination of the current rotational position of the roller from a reference point). Signals from the sensor are indicative of the vertical displacement of the bow of the vessel (relative to the structure) and, as will be described below, can be used in providing a feedback signal to (in part) control the positioning of the gangway assembly 10.

The gangway assembly 10 comprises a gangway/access ramp 11 and a motion compensator base 20, and is located on a foredeck 7 of the vessel 1. The gangway 11 comprises a walkway 12 and handrails 13. A proximal distal end 14 of the gangway is pivotably attached to the motion compensator base 20. The gangway 11 further comprises a distal free end 15.

The motion compensator base 20 comprises gimballed mounting assembly 25 which comprises a base plate 25a and an upper frame structure 25b. The base plate 25a and the upper frame structure 25b are pivotably connected at pivots 26. The upper frame structure 25b encloses two hydraulic roll compensation rams 21. Respective distal ends of each ram are pivotably connected to the base plate 25a and the upper frame structure 25b. An uppermost portion of the upper frame structure 25b is pivotably connected to the proximal distal end of the gangway 11 at pivots 27. A lower portion of the upper frame structure 25b pivotably connects a hydraulic vertical compensation ram 23 to an underside of the base 12 of the gangway 11.

Although the roll compensation rams 21 are described above as being active, in an alternative embodiment they are passive shock-absorber type rams (for example in the form of gas-springs), such that the gimballed mounting is resilient.

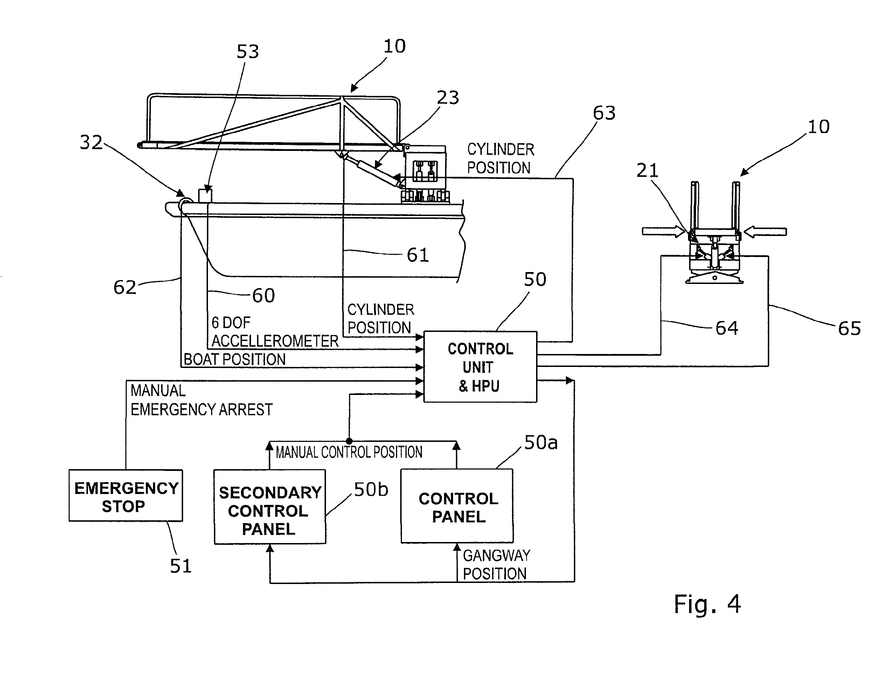

Reference is now made to Figure 4 which shows a block diagram of a control system which is connected to the gangway assembly 10 and the roller assembly 30. The control system comprises a combined control unit, comprising a suitably configured processor, and hydraulic power unit (HPU) 50. As will be discussed below, the unit 50 executes control of motion compensator base 20 of the gangway assembly 10. The unit 50 is connected to an accelerometer 53 (for example a multiple degree-of-freedom accelerometer) which provides a signal 60 indicative of the instantaneous motion of the vessel. The unit 50 is also connected to the vertical compensation ram 23 to receive a signal 61 indicative of the instantaneous position of the cylinder of the ram. The unit 50 further receives a signal 62 from the sensors associated with the rollers 32 which is indicative of the rotational position of the rollers 32, and hence is indicative of the (vertical) position of the vessel relative to the structure. It will be appreciated, however, that signals from the sensors of the rollers 62 may not necessarily be used in control of the hydraulic rams, and that control of the rams may rely solely signals from the accelerometer 53. The unit 50 is further connected to principal and secondary control panels 50a and 50b which allow a user to manually control the gangway assembly 10. Multiple emergency stop controls 51 are also provided to the control unit 50.

In response to received signals from the various sensors and/or manual controls, the HPU of control unit 50 is operative to provide a controlled supply of pressurised hydraulic fluid 63, 64 and 65 to the rams 21 and 23.

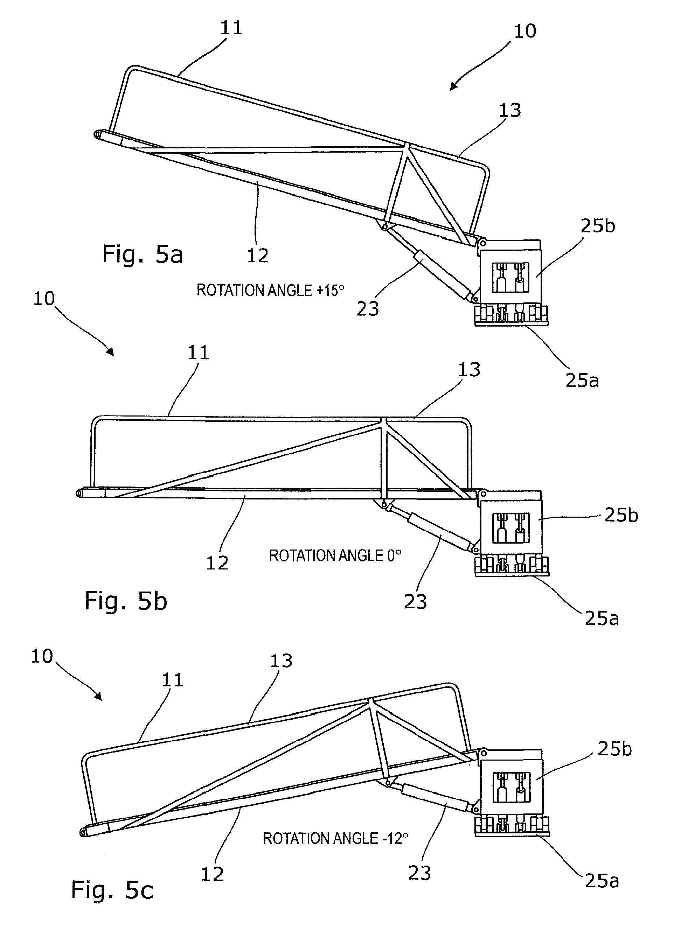

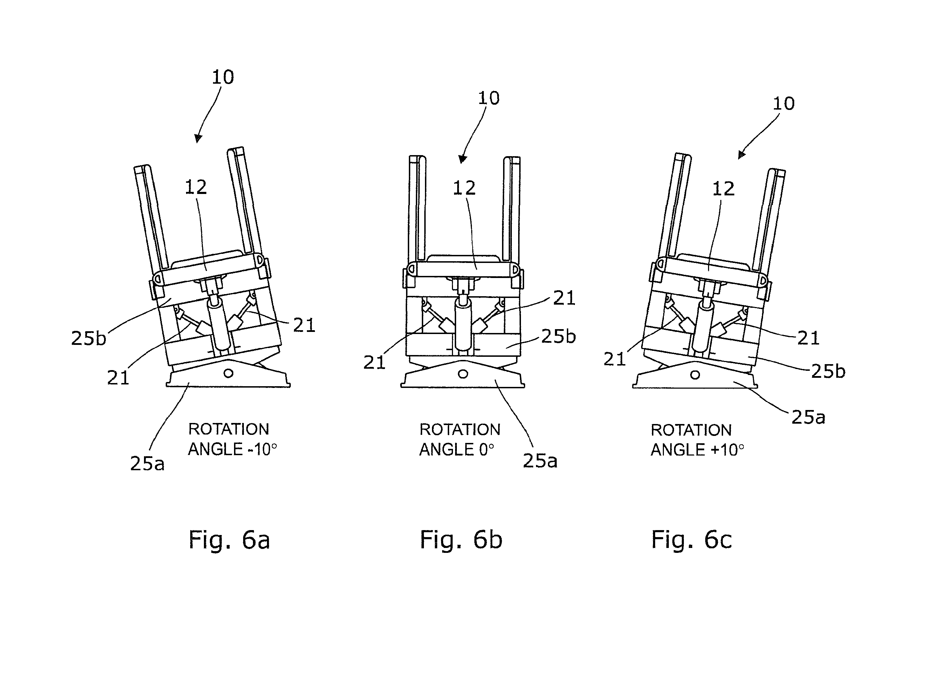

Reference is now made to Figures 5a, 5b and 5c, which show the gangway 11 positioned by the ram 23 at a elevation angle of 15 degrees, a mean position and a declination of 12 degrees, respectively. Reference is also made Figures 6a, 6b and 6c, which show how the rams 21 are controlled to position the gangway 11 at a transverse declination of ten degrees, a mean position and a transverse elevation of ten degrees, respectively.

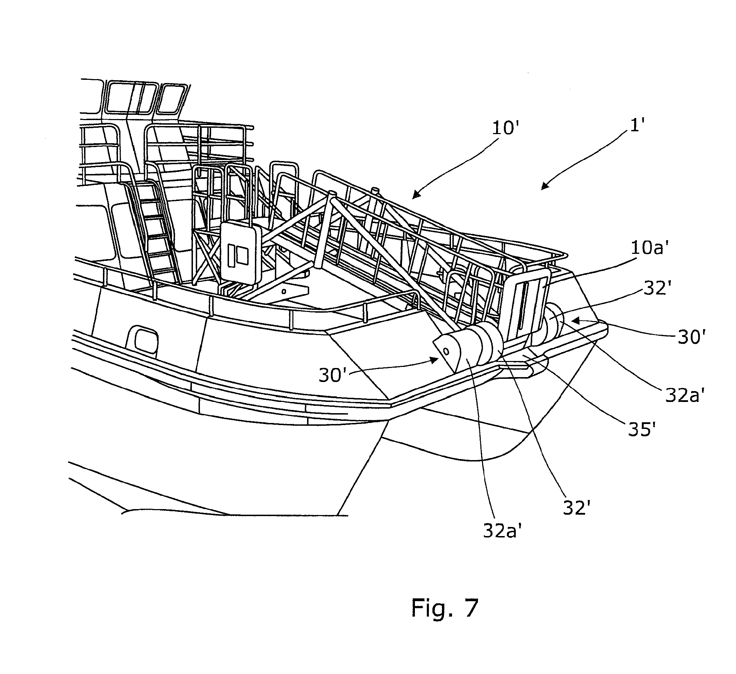

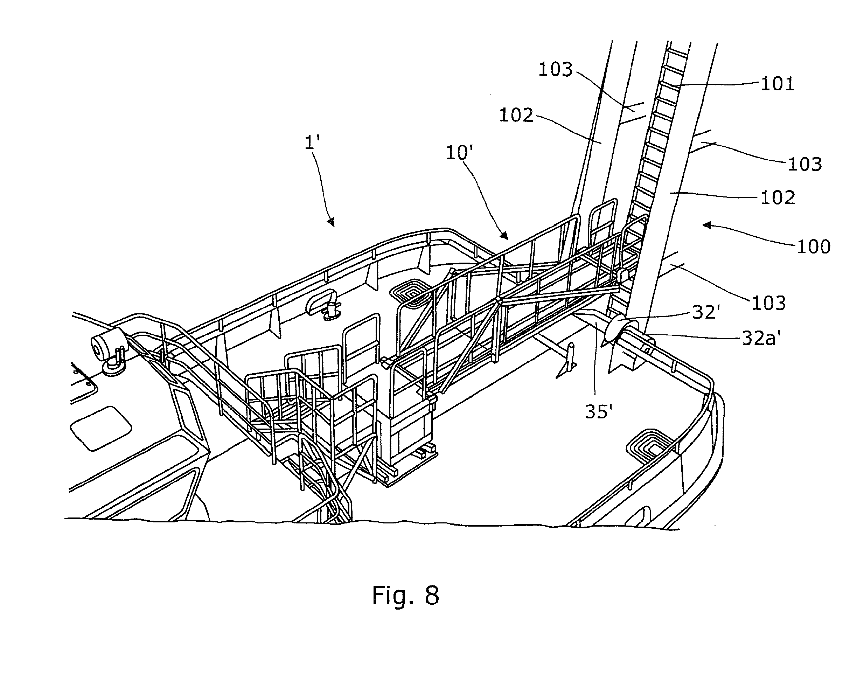

An example of a roller assembly 30' and the gangway assembly 10', which are very similar to and essentially functionally equivalent to the roller assembly 30 and the gangway assembly 10 described above, will now be described with reference to Figures 7 and 8. In particular, the use of the roller assembly 30' and the gangway assembly 10', which are provided on a vessel 1', will be described with reference to allowing the vessel to access to an offshore wind turbine structure 100, namely a tower of the foundation of an offshore wind turbine. The turbine structure 100 is accessed by way of a ladder 101 which is enclosed by a protective enclosure which comprises two spaced-apart members, or fenders, 102 which are attached to the turbine structure by way of a plurality of components 103 which extend outwardly from the structure 100.

The roller assembly 30' comprises two spaced-apart damped rollers 32', which are spaced apart by substantially the distance separating the members 102. A housing 32a' is provided adjacent to each roller and contains both a (respective) damper and a (respective) sensor to sense the rotational position of the roller (which information is then received by the control unit 50).

The gangway assembly 10' comprises an end portion 10a' which is pivotably connected to the main body of the gangway and can adopt an upright stowed condition (as shown in Figure 7) and downward deployed condition (as shown in Figure 8).

In use, the vessel 1' approaches the structure 100, and aligns the rollers 32' with the members 102. The vessel pushes the rollers 32' against the members 102. It will be appreciated that the shape and configuration of the rollers 32' aids location of the rollers against the members 102 and so aids positioning of the vessel relative to the turbine structure 100. The vessel uses forward thrust to ensure that the rollers 32' remain pressed against the members 102. However, the vessel needs only apply enough forward thrust for sufficient frictional engagement against the structure 100 so that vertical displacement of the bow is inhibited (ie not completely prevented, but acting to restrict) by the damped rollers. In this position it is to be noted that the protruding portion 35' is received between the members 102.

Once the vessel is in its final position relative to the tower, the gangway assembly 10' is lifted from its stowed position by way the control unit 50 suitably activating the ram 23. The end portion 10a' is then folded down. The operator on the vessel 1' then uses the control panel 50a to activate the motion compensation mode in which the unit 50 processes the signals received from the various sensors in which the height and relative heading of the gangway assembly 10' are varied (in response to received sensor signals) and so maintain substantially constant zero motion of the gangway assembly 10' relative to the structure turbine 100. The height is varied through active vertical compensation and changes in relative heading due to roll are compensated by way of active or passive control of the gangway assembly at the gimballed mounting base.

As the action of swells and wave motion act on the vessel 1', the rollers 32' will resist being rotated against the members 102. This in turn limits the extent to which the vessel can move vertically relative to the structure 100. This results in a predictable and controlled motion response from the vessel 1' and so sudden movements are advantageously avoided. The magnitude of the damping of the rollers can be manually or automatically adjustable to a required value (according to vessel type and wave heights). In a modified embodiment, the structure, and in particular the fenders of structure, are provided with high friction pads or a serrated (rubber) track, which engage with specifically modified rollers of the vessel.

Although mention has been made above to accessing a wind turbine structure, it will be appreciated that the vessel 1' could be adapted for use with enabling access to other offshore structures, such as oil/gas rigs or wave power generators, or indeed to enabling access from one vessel to another.

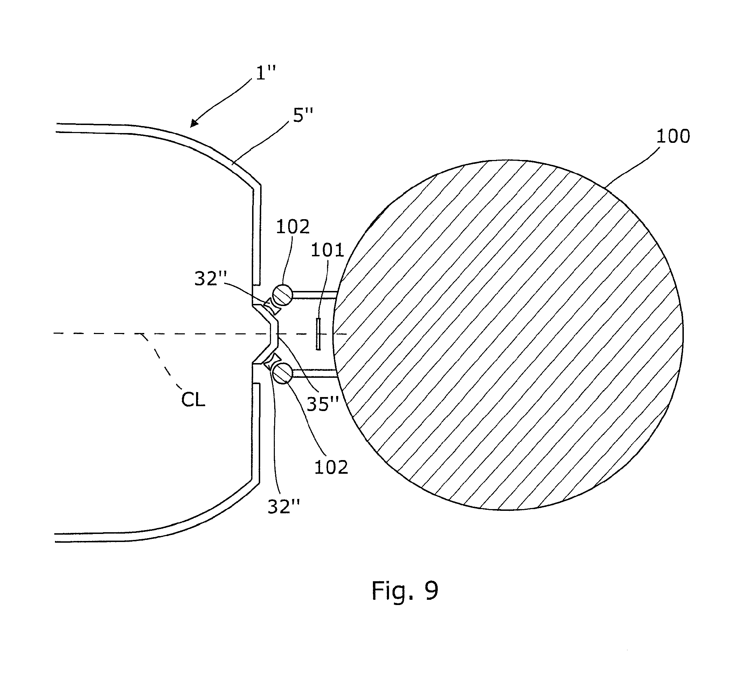

It will also be appreciated that although two rollers are included in the above embodiments, in alternative embodiments more or fewer rollers could be included, as appropriate. Although the above embodiments show damped rollers with axes at ninety degrees to the centre line (CL) of the vessel, in alternative embodiments the axes of the rollers may be at a different relative angle. For example, in the embodiment shown in Figure 9, the damped rollers 32" are at an angle of approximately forty five degrees to the CL.

It will further be appreciated that all of the above embodiments are of particular application in relation to vessels which 'nose-up' to a structure to be accessed. Advantageously, the damped rollers obviate the need for (time-consuming) Dynamic positioning (DP) procedures.

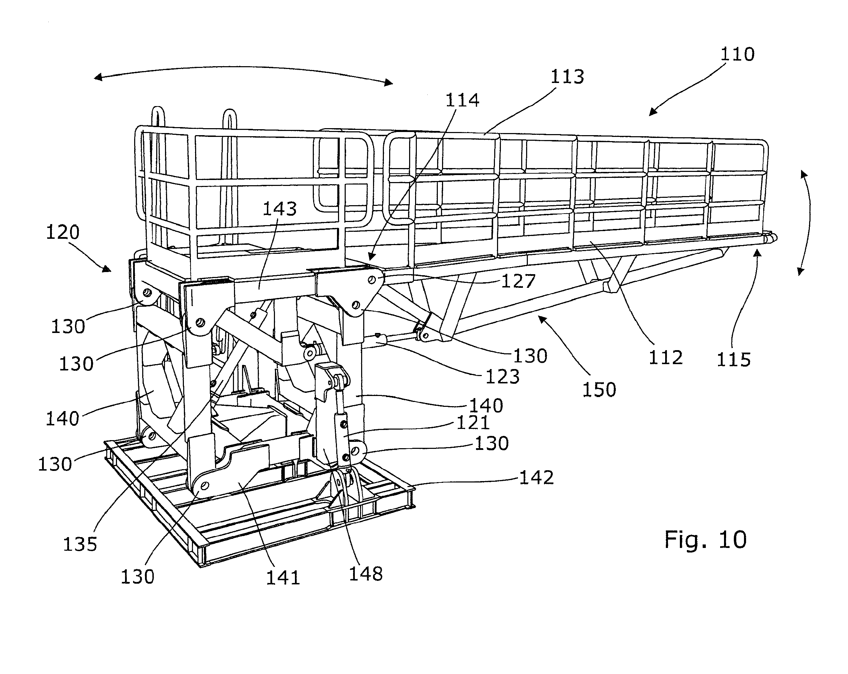

With reference to Figures 9 and 10 there is shown a gangway assembly 110, comprising a motion compensation a base 120, a base frame (or bed plate) 142, a base structure 141, two side structures 140 (namely a forward side structure and a rearward side structure) and an upper support structure 143. The side structures 140 connect the base structure 141 to the upper structure 143, by way of pivot connections 130, such that the upper support structure is moveable relative to the base structure generally forwards and rearwards (as shown by the double-headed arrow in Figure 10). The side structures are generally in form of sub-frames, and the base structure 141, the side structures and the upper support structure form a dynamic trapezoid structure, and in particular a dynamic parallelogram structure.

An actuator 135, comprising a hydraulic ram, connects the base structure to the upper support structure so as to apply a force to the upper support structure, and when activated causes the upper support structure to move relative to the base structure, by way of the pivot connections. In particular, a lower end of the ram is attached to the base structure 141 and an upper distal end of the ram is attached to the upper support structure. The actuator 135 forms a surge compensation ram.

Two depending members are attached to and depend from an underside of the upper support structure. Attached to the junction of the depending members there is provided a pivot mount for a actuator 123 comprising a hydraulic ram, which is a pitch compensation ram, compensating for the vertical motion. The opposite end of the pitch ram 123 is connected to a pivot connection attached to an underside of the walkway 112. The proximal end of the walkway 112 is pivotably connected to the upper support structure 143 by way of pivot connections 127.

In order to achieve roll compensation an actuator 121 is provided at each (lateral) side of the motion compensation base 120. The actuator 121 comprises a hydraulic roll ram. A lower end of each ram is connected to a base frame 142 at mountings 147, and upper ends of the rams are connected to respective mountings 148, the mountings 148 being attached to the base structure 141.

It will be appreciated that although two hydraulic roll rams are included in the above embodiments, only a single roll ram could be included.

The base structure 141 is pivotably connected to the base frame 142 by way of pivot connections 126.

The distal free end 115 of the walkway 112 comprises proximity sensors 160 and 161. The spaced-apart sensors 160 are located at and endmost portion of the walkway and are arranged to sense the position of the walkway relative to an adjacent object which is foremost of the walkway. The sensors 161 are provided at side portions of the walkway and arranged to sense the position of the walkway relative to objects/an object located to the sides of the walkway. The sensors operate by emitting pulses and detecting when a reflected pulse is received. It will be appreciated, however, that alternative sensor types could be used, such as ultra-sonic, laser and/or vision-recognition.

An access stairway 170 is provided attached to the upper support structure 143 to provide access thereto.

In use the motion compensation base is arranged to compensate for motions of the vessel (to which the gangway assembly is mounted) so as to minimise motion of the walkway relative to the structure to be accessed, and preferably to substantially eliminate such relative motion. A feedback control system is employed to effect the motion compensation, similar to that discussed above, which includes a suitably configured data processor. Such a control system uses signals received from the sensors 160 to generate control signals to the surge ram such that on the sensor detecting that the walkway is moving away from the structure, the surge ram is activated so as to urge the walkway towards the structure, and vice versa. Should the sensors detect that there is lateral movement of the walkway relative to the structure, indicative of roll movement of the vessel as experienced by the walkway, the roll rams 121 are caused to pivot the walkway in the opposite sense to the detected movement. An onboard sensor, not illustrated, such as an accelerometer, detects changes in elevation of the walkway induced by the vessel heaving and pitching, and the pitch ram 123 is controlled so as to drive the ram in the opposite sense of the detected change in elevation.

As will be appreciated, the above embodiments of gangway assembly achieve a stabilised outboard free end.

Although in the above embodiments hydraulic ram cylinders are referred to, it will be appreciated that electric actuators or any other type of linear actuator could be used.

## Claims

1. A gangway assembly for a vessel comprising a gangway, a pivotable base, a sensor arrangement to sense movement of the vessel in use, an end portion of the gangway being pivotably connected to the base and a first actuator being connected to the gangway and being responsive to signals from the sensor arrangement to control the vertical position of an opposite end portion of the gangway so as to compensate for vertical movement of the vessel in use, and the base being arranged to respond to and compensate for roll of the vessel.

2. A gangway assembly as claimed in claim 1 in which the first actuator located at a distal end portion of the gangway.

3. A gangway assembly as claimed in claim 1 or claim 2 in which the gangway is pivotably mounted to the actuator.

4. A gangway assembly as claimed in any of claims 1 to 3 in which the base comprises a gimballed base.

5. A gangway assembly as claimed in any of claims 1 to 4 in which the pivotable base comprises an upper support structure, a lower support structure and a connecting structure which is pivotably connected to the upper support structure and to the lower support structure, and which supports the upper support structure on the lower support structure, and the upper support structure is arranged for movement relative to the lower support structure by virtue of the connecting structure.

6. A gangway assembly as claimed in claim 5 which comprises a second actuator arranged to be capable of applying a force so as to control the position of the upper support structure relative to the lower support structure.

7. A gangway assembly as claimed in any of claims 1 to 6 in which the first actuator is arranged to adjust the gangway position to take account of vertical motion of the vessel resulting from the vessel pitching and heaving.

8. A gangway assembly as claimed in any of claims 1 to 7 in which the opposite end portion of the gangway comprises a free-end portion arranged to be unattached to a structure to be accessed.

9. A gangway assembly as claimed in any of claims 1 to 7 in which the opposite end portion of the gangway comprises a free-end portion arranged to locate within an access region of a structure to be accessed.

10. A gangway assembly as claimed in any of claims 1 to 9 in which the base comprises a responsive roll actuator so as to adjust the gangway to take account of and compensate for rolling of the vessel.

11. A gangway assembly as claimed in any one of claims 1 to 10 in which the base comprises a surge actuator arranged to adjust the gangway to take account of and compensate for longitudinal movement of the gangway relative to a structure to be accessed.
